# EUROPEAN PATENT SPECIFICATION

(11) **EP 2 073 551 B1**
(45) Date of publication and mention of the grant of the patent: **02.03.2011**
(21) Application number: 07024746.5
(22) Date of filing: 20.12.2007
(51) Int. Cl.: H04N 7/24

(54) **Method and system for configuring a TV signal**
System und Verfahren zum Konfigurieren eines TV-Signals
Procédé et système de configuration d'un signal TV

(43) Date of publication of application: 24.06.2009
(73) Proprietor: Koninklijke KPN N.V., 2516 CK The Hague (NL); Nederlandse Organisatie voor Toegepast -Natuurwetenschappelijk Onderzoek TNO, 2628 VK Delft (NL)
(72) Inventor: Walraven, Fabian Arthur, 9711 VM Groningen (NL); Stokking, Hans Maarten, 2545 HK The Hague (NL); van Deventer, Mattijs Oskar, 2264 DL Leidschendam (NL); Niamut, Omar Aziz, 3131 HV Vlaardingen (NL)
(74) Representative: Wuyts, Koenraad Maria

(56) References cited:
- EP-A- 0 915 598
- EP-A- 1 119 120
- EP-A- 1 793 605
- EP-A- 1 826 978
- WO-A-02/052859
- WO-A-02/058252
- WO-A-2004/075555
- US-A1- 2003 163 528
- US-A1- 2008 134 269

## Description

### Field of the invention

The invention relates to a method for configuring a TV signal for a display device. The invention further relates to a system for using such method.

### Background of the invention

IP Multi-Media Subsystem (IMS) defined by the 3GPP and 3GPP2 standards open the door to a whole range of new multimedia technologies, such as Voice over IP (VoIP) and IPTV. The IMS service architecture enables to combine multimedia services of various types.

One type of IPTV services relates to so-called enhanced TV services. A subscriber to such services may select content-related information streams associated with a TV channel or a TV programme (e.g. background music, speech, textual and graphical overlays providing additional information on an associated TV channel, different commentators in a particular programme, video signals comprising different camera positions, picture-in-picture functionality, high definition video etc.) supplementing or (partly) replacing (one or more of) the conventional audio, video and text streams in the TV signal. An enhanced TV service allows personalization and/or enrichment of the content of a conventional TV signal with additional or alternative information offered by an TV service provider.

In known IPTV systems an analog TV signal or a digital video broadcast signal of a central broadcast station (e.g. a satellite, cable- or terrestrial station) is converted into one or more packetized transport streams which are introduced as multicast streams into a high bandwidth network of the operator. These streams are further distributed by media servers via access nodes to end-terminals.

The "local" access line between the access node and the end-terminal is an access line, e.g. a Digital Subscriber line (DSL), that usually has limited bandwidth. Hence, the number of streams, which can be sent simultaneous from the access node to an end-terminal is limited. For that reason, in known IPTV systems the access node is configured as a TV channel switching system. Whenever a user changes from a current channel to another different channel, the end-terminal requests the access node or the IPTV middleware of the provider to leave the current multicast group associated to the current TV channel stream and to join a new multicast group associated with the newly selected TV channel.

The access node will transmit a requested TV channel stream, typically a MPEG transport stream, to the end-terminal. The MPEG transport stream contains a predetermined number of substreams, also known as elementary streams(ES). Each substream comprises one particular type of information (e.g. video, audio, text, subtitles, security information, etc.). Enhanced TV services require additional substreams to be added to the TV channel stream. The number of substreams available in an MPEG transport stream is however limited.

Another problem relates to the fact that a conventional IPTV system transmits the whole MPEG stream comprising all substreams of one TV service over the access line to the end-terminal. Only a selected number of all substreams however is presented to the user of the end-terminal.

Similarly, if the end-terminal supports picture-in-picture, e.g. to show other channels in a small picture on screen which can be useful for users when changing channels, then the complete MPEG stream of this TV service needs to be sent to the end-terminal, even though only the video part of that TV service is used.

Consequently, a conventional IPTV system would transmit all substreams of the enhanced TV service, including the substreams not selected and used by the user, to the end-terminal thereby unnecessarily occupying valuable bandwidth of the access line.

Further, certain end-terminals allow for recording of streams for later viewing. Recording an MPEG stream with multiple substreams will require a lot of storage capacity. The substreams not used by the end-user will unnecessarily occupy storage capacity.

EP1826978 discloses a method to optimize the data stream between a router and a multimedia unit The router receives at least one data stream forming a service and which comprises several sub-streams from which part of them are alternatively used by the multimedia unit. In this method a set of data representing the multimedia unit's profile is defined. This set of data is transmitted to the router. The unnecessary sub-streams according to the given profile are filtered by the router and the remaining sub-streams are sent to the multimedia unit.

WO02/058252 discloses a method for broadband multimedia telecommunications. The method includes the coupling of a local switch to an optical network and to a digital subscriber line, the optical network carrying a first plurality of audio/video channels; the coupling of customer premises equipment to the digital subscriber line and to an audio/video output device, the customer premises equipment including channel selection means for selecting a channel from the first plurality of channels for transmission from the local switch to the customer premises equipment; sending a message from the channel selection means to the local switch identifying a selected channel; receiving the message at the local switch; and transmitting the selected channel to the customer premises equipment

US2003/163528 Al discloses a multicasting system and method of a network for providing personalized content to remote users of the network having different bandwidths. The personalized content includes Internet and World Wide Web (WWW) content. The system and method allow the user to communicate within a network utilizing a multicast design. The host establishes group membership for the multicast group and then establishes an individualized set of broadcast criteria. This is accomplished by another process that registers streams of interest for the host. Should any member of the group broadcast data, the group system disseminates the data into discrete segments. The system then refers to the stream of interest register to determine which segments of the broadcast will be sent to which hosts in the network.

### Summary of the invention

It is an object of the invention to reduce or eliminate at least one the drawbacks known in the prior art and to provide a method and system of forming a user-configured TV signal for a display device according to the appended claims.

The method for configuring an TV signal is used in a system comprising an end-terminal connected to an access node and one or more media servers capable of transmitting a predetermined number of multicast streams associated with a user-configurable TV service to the access node.

The method comprises the steps of: (i) retrieving stream selection information of the user-configurable TV service; (ii) selecting streams from the predetermined number of multicast streams using the stream selection information; (iii) sending for each selected multicast stream a stream request message to the access node, wherein the request message requests transmission of the selected stream to the end-terminal; and (iv) receiving the selected streams.

In the method according to the invention, the media server separately transmits all streams, e.g. video stream, audio stream, subtitle stream, etc., associated with an enhanced, user-configurable TV service to the access node. Thereafter only a limited number of selected streams of the enhanced TV service is transmitted via the access line to the end-terminal. The method thus allows formation of a user-configured, TV signal and transmission of this user-configured TV signal to the end-terminal without unnecessarily occupying bandwidth of the access line.

Further advantages of the method according to the invention include: no unnecessarily occupation of storage capacity when recording the user-configured TV signal is required, the possibility of configuring of a TV signal using a very large number of streams. The method further eliminates the need for mixing and/or encoding equipment in the network. The process of combining the selected streams to a user-configured TV signal is realized by the functional units in the end-terminal.

In an embodiment the access node is connected via a gateway, preferably a home-located gateway, to the end-terminal.

The method further comprises the step of synchronizing the selected streams. The synchronization may be performed by the end-terminal using e.g. a variable delay buffer. Alternatively the synchronization may be performed by the gateway or the access node, as the delays in the access line between the end-terminal and the access node will be very similar for the different streams of the TV signal. This means that a synchronized stream at the gateway or access node will arrive synchronized or nearly synchronized at the end-terminal. Synchronization at the access node will eliminate the need of synchronization functionality present in the end-terminals, such as variable buffer delays and functionality for receiving and transmitting timing information. Elimination of this functionality reduces the cost of the end-terminal and the allows to use legacy terminals that do not have these capabilities.

In one embodiment the selected streams may be synchronized using information from the RTP protocol contained in the RTP packets, preferably the RTP timestamp information. By configuring the RTP timestamp information in the network, e.g. in the multimedia servers, to be the same for the separate streams, this information can be used at the end-terminal for synchronization purposes. The RTP timestamp information allows simple and efficient synchronization of the selected streams defining the user-configured TV service.

In one embodiment the stream selection information is preferably provided by an electronic programming guide (EPG). In an other embodiment a Domain Name System (DNS) scheme may be used to retrieve the stream selection information. An electronic programming guide (EPG) may offer the streams available via a display device to the user. Using an remote control, the user may browse through the EPG and select the streams thus allowing the user to efficiently configure the enhanced TV service according to his personal needs.

The selection information comprises the IP addresses, preferably the multicast addresses, of the multicast streams associated with a user-configurable TV service.

In another embodiment the stream request message comprises an Internet Group Management Protocol (IGMP) join request. IGMP allows efficient selection of multicast groups.

In a further embodiment the one or more media servers are further capable of transmitting a predetermined number of unicast streams associated with the user-configurable TV service to the access node, preferably using the RTSP protocol. The method further comprises the steps of: (i) selecting one or more unicast streams from the predetermined number of unicast streams using the stream selection information; and (ii) sending for each selected unicast stream a stream request message to one or more media servers.

Unicast streams can be used if the availability of multicast addresses is limited. In that case, in one embodiment, the selection information further comprises URLs, preferably the RTSP URLs, of the predetermined number of unicast streams associated with a user-configurable TV service.

Further, in yet another embodiment, the stream request message comprises an RTSP SETUP message. The request will be sent via the access node to an RTSP server thereby allowing the end-terminal to retreive the unicast stream using a RTSP session.

In yet another embodiment the streams are selected using a user-profile stored in the memory of the end-terminal. The use of a user-profile allows automatic configuration of the enhanced TV service without the need of external input from the user.

In one embodiment of the invention at least part of the stream selection information of the user-configurable TV service is displayed on a display unit connected to the end-terminal and a user is capable of selecting streams from the displayed stream selection information using a remote control.

In a further aspect the invention relates to a system for configuring an TV signal. The system comprises: an end-terminal connected to an access node and one or more media servers capable of transmitting a predetermined number of multicast streams associated with a user-configurable TV service to the access node, wherein the end-terminal comprises: means for retrieving stream selection information of the user-configurable TV service; means for selecting streams from the predetermined number of multicast streams using the stream selection information; means for sending for each selected multicast stream a stream request message to the access node, wherein the request message requests transmission of the selected stream to the end-terminal; and means for receiving the selected streams.

The invention will be further illustrated with reference to the attached drawings, which schematically show embodiments according to the invention. It will be understood that the invention is not in any way restricted to these specific embodiments.

### Brief description of the drawings

Fig. 1 depicts an exemplary embodiment of an exemplary system according to the invention.
Fig. 2 depicts an exemplary embodiment wherein IGMP join requests are sent to the access node for each selected multicast stream.
Fig. 3 depicts an exemplary embodiment wherein an RTSP connection is used to retrieve a selected unicast stream.

### Detailed description

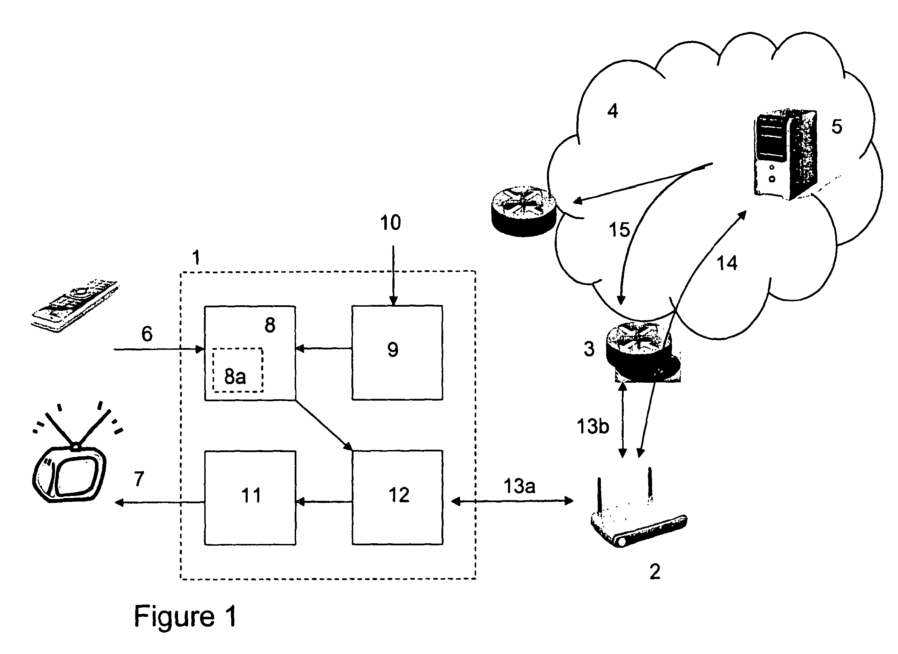

Fig. 1 illustrates an exemplary system according to the invention. A home-located end-terminal 1, is connected via an access line 13a,13b to an access node 3. The access line, e.g. a DSL line, may contain a gateway 2, preferably a home-home located gateway. The end-terminal may be a set-top box connecting a display unit 7, e.g. a television, a personal digital assistant (PDA) or a personal computer to the access node. A plurality of separate multicast streams 15 is transmitted by one or more multimedia servers 5 over a high bandwidth IP network 4 to the access node 3. The media servers 5 are also capable of transmitting one or more unicast streams 14 using e.g. the RTSP protocol via the access node to the end-terminal. The media server is thus capable of acting as RTSP server for the end-terminal (as RTSP client). The access node is a network device, located near the user's location, that connects multiple access lines to a high-speed IP network. Such network devices include Digital Subscriber Line Access Multiplexers (DSLAM) and optical access nodes.

A predetermined number of streams transmitted by the multimedia servers is associated with a user-configurable enhanced TV service. In case the operator offers several enhanced TV services, the one or more multimedia servers will transmit sets of streams, wherein each set comprises a predetermined number of streams and wherein each set of streams is associated with a particular enhanced TV service. The user may select streams from one set in order to form a user-configured TV service. Preferably the streams in the user-configurable TV service are multicast streams. In some cases however, e.g. limited availability of multicast addresses, unicast streams can be used for the less-used streams. Hence, the user-configured TV signal may contain both multicast and unicast streams.

In order to allow a user to configure an enhanced TV service, the end-terminal comprises certain functional units. To that end, the end-terminal comprises a stream information unit 9. In a first step, the stream information unit 9 receives stream selection information 10 of the user-configurable TV services offered by the operator via the network 4. The stream selection information may be made available through an Electronic Programming Guide (EPG) provided by the operator to the end-terminal of the user or a Domain Name System (DNS) type scheme.

The stream selection information 10 comprises information on the streams associated with the one or more user-configurable TV services. This information may include the type and/or content of the streams. Further, the stream selection information comprises information for retrieving the streams from the network such as IP (multicast) addresses of the multicast steams and/or RTSP Uniform Resource Locators (URLs) hosted by unicast RTSP servers.

The stream selection information may be provided by a stream information manager, which may be part of the functionality of the IPTV middleware. The IPTV middleware may be located at a data center of the operator, which may also house the one or more media servers 5. Alternatively, the stream information manager may have a distributed architecture having various distributed functional entities located at various locations in the network.

In a second step, streams are selected from the stream selection information. This operation is performed by a stream selection unit 8, which may be activated upon input of a user by using e.g. a remote control 6. The stream selection unit is capable of offering the received stream selection information to the user, e.g. via an overlay menu in the display unit 7. Using a remote control 6, the user may browse through the available streams offered by the enhanced TV service and select streams thereby defining a configuration of the enhanced TV service which complies with his personal needs.

In one embodiment, the end-terminal 1 may further comprise one or more predefined user-profiles stored in a memory 8a of the end-terminal. Using the remote control, the user may select a particular user-profile, allowing the end-terminal to automatically select the streams defining an enhanced services according to the preferences of the user as defined in the user-profile.

If stream selection unit 8 is not triggered by an external user, the stream selection unit may use the default setting of an enhanced service. Default settings of each enhanced service may be provided by the provider via the stream selection information 9 or, alternatively, the default settings may be customized default settings based on the user-profiles as described above.

Thereafter, the stream selection unit 8 transmits the selected stream information defining the user-configured TV service to a stream retrieval unit 12. The stream retrieval unit is connected via a gateway 2, typically a home-located gateway, to the access node 3. For each selected stream the stream selection unit sends - in a third step - a stream request message to the access node.

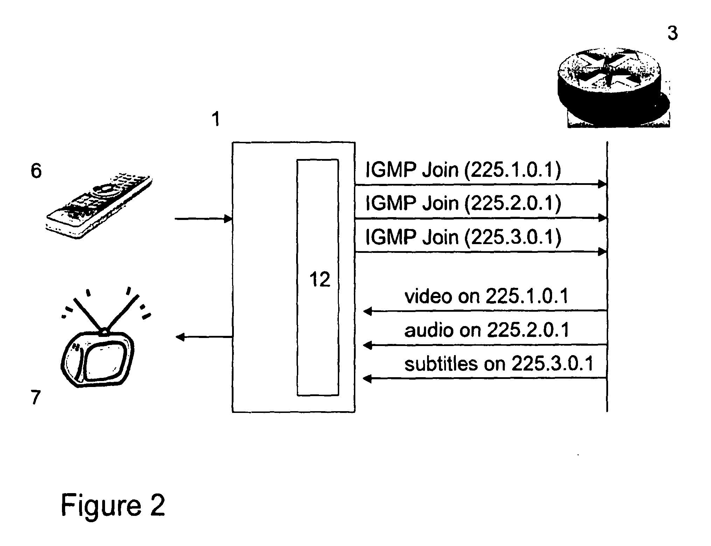

For each selected multicast stream, the stream retrieval unit 12 will send an Internet Group Management Protocol (IGMP) join request to the access node. This is schematically illustrated in Fig. 2.

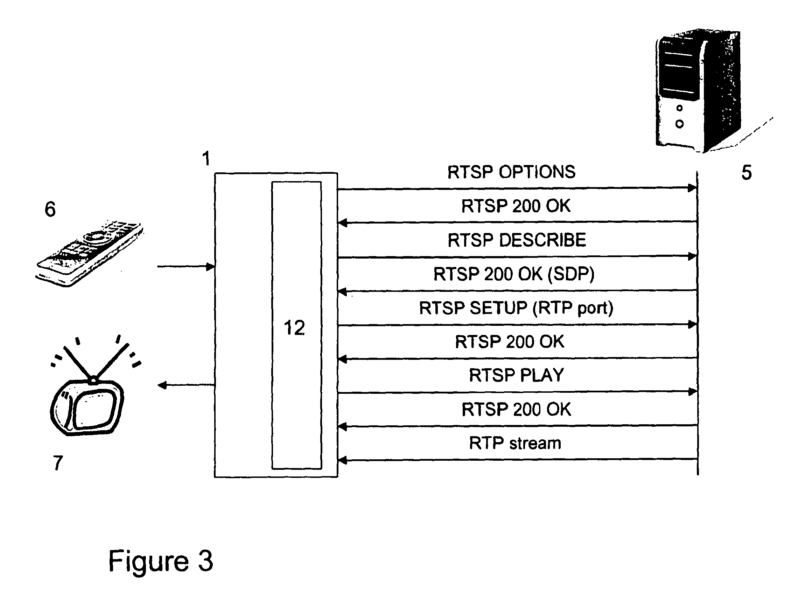

In case the selected streams also contain a unicast stream, the stream retrieval unit will act as an RTSP client setting up a RTSP multimedia session with an RTSP server identified by an RTSP URL in the selected stream information. This request is schematically illustrated in Fig. 3. In the situations as depicted in Fig. 2 and 3, the gateway 2 just passes the signals form the end-terminal to the access node and vice versa.

The home gateway 2 however may also be connected to other home-located devices such as a personal computer or Wi-Fi network. In that situation, it is desired that the selected streams are only transmitted to the end-terminal and not the other home-located devices. To that end, the end-terminal may send a unicast request, e.g. using RTSP, to the gateway instructing the gateway to retrieve the selected multicast streams. In response, the gateway will retrieve the selected multimedia streams by sending IGMP join requests for each selected stream to the access node in a similar way as described above in connection with Fig. 2. Thereafter, the gateway will take care that the requested streams will be transmitted from access node to the end-terminal and not to the other home-located devices connected to the gateway.

In another embodiment, the TV service uses a separate virtual LAN (VLAN) on the gateway for sending streams to the end-terminal. The separate VLAN allows for streams to be transmitted only to the end-terminal, even when the streams are sent as multicast streams.

In response to the requests send by the end-terminal to the access node and - in case of a unicast request - to the one or more RTSP servers, the access node and the one or more RTSP servers will transmit the selected streams to the end-terminal. The streams defining the user-configured TV signal may require synchronization, e.g. to achieve "lip-sync", synchronizing between audio stream and video stream.

Therefore, in a fourth step, the selected streams are synchronized. To that end, the end-terminal may have a stream synchronization unit 11, which may comprise a variable delay unit, e.g. a variable delay buffer. The synchronization unit may use the RTP information of the streams, in particular the RTP time-stamp information, for synchronizing the selected streams. Alternatively, the synchronization function may be located in the home gateway or the edge router, as the delays in the access line between the end-terminal and the access node will be very similar for the separate streams.

The invention is not limited to the embodiments described above, which may be varied within the scope of the accompanying claims. The end-terminal may be e.g. a functional unit in a device which is capable of displaying the user-configured TV signal, e.g. a personal computer or a PDA.

## Claims

1. Method for configuring a TV signal in a system comprising an end-terminal connected to an access node, one or more media servers capable of transmitting a predetermined number of multicast streams associated with a user-configurable TV service to the access node, the method comprising the steps of:
- retrieving stream selection information of the user-configurable TV service; the stream selection information comprising the IP addresses, preferably the multicast addresses, of the multicast streams associated with a user-configurable TV service
- selecting multicast streams from the predetermined number of multicast streams using the stream selection information;
- sending for each selected multicast stream a stream request message to the access node, wherein the request message requests transmission of the selected stream to the end-terminal;
- receiving the selected streams
- synchronizing the selected streams.

2. Method according to claim 1, wherein the access node is connected via a gateway, preferably a home-located gateway, to the end-terminal.

3. Method according to claim 2, wherein the synchronization is performed by the end-terminal, the gateway or the access node.

4. Method according to claims 2 or 3, wherein the selected streams are synchronized using information from the RTP protocol contained in the RTP packets, preferably the RTP timestamp information.

5. Method according to any of claims 1 to 4, wherein the stream selection information is provided by an electronic programming guide (EPG) or using a Domain Name System (DNS) scheme.

6. Method according to any of claims 1 to 5, wherein the stream request message comprises an Internet Group Management Protocol (IGMP) join request.

7. Method according to any of claims 1 to 6, wherein the one or more media servers are further capable of transmitting a predetermined number of unicast streams associated with the user-configurable TV service to the access node, preferably using the RTSP protocol, the method further comprising the steps of:
- selecting one or more unicast streams from the predetermined number of unicast streams using the stream selection information;
- sending for each selected unicast stream a stream request message to one or more media servers.

8. Method according to claim 7, wherein the selection information further comprises URLs, preferably the RTSP URLs, of the predetermined number of unicast streams associated with a user-configurable TV service.

9. Method according to any of claim 7 or 8, wherein the stream request message comprises an RTSP SETUP message.

10. Method according to any of claims 1 to 9, wherein the streams are selected using a user-profile stored in the memory of the end-terminal.

11. Method according to any of claim 1 to 9, wherein at least part of the stream selection information of the user-configurable TV service is displayed on a display unit connected to the end-terminal and a user is capable of selecting streams from the displayed stream selection information using a remote control.

12. System for configuring an TV signal comprising:
- an end-terminal connected to an access node;
- one or more media servers capable of transmitting a predetermined number of multicast streams associated with a user-configurable TV service to the access node;
wherein the end-terminal comprises:
- means for retrieving stream selection information of the user-configurable TV service; the stream selection information comprising the IP addresses, preferably the multicast addresses, of the multicast streams associated with a user-configurable TV service
- means for selecting multicast streams from the predetermined number of multicast streams using the stream selection information;
- means for sending for each selected multicast stream a stream request message to the access node, wherein the request message requests transmission of the selected stream to the end-terminal;
- means for receiving the selected streams.
wherein the end-terminal or the access node or a gateway is configured for synchronizing the selected streams.

## Patentansprüche

1. Verfahren zum Konfigurieren eines TV-Signals in einem System, das ein mit einem Zugangsknoten verbundenes Endgerät und einen oder mehrere Medienserver mit der Fähigkeit zum Übertragen einer vorbestimmten Anzahl von mit einem benutzerkonfigurierbaren TV-Dienst assoziierten Multicast-Streams zu dem Zugangsknoten umfasst, wobei das Verfahren die folgenden Schritte umfasst:
- Abrufen von Stream-Auswahlinformationen des benutzerkonfigurierbaren TV-Dienstes; wobei die Stream-Auswahlinformationen die IP-Adressen, vorzugsweise die Multicast-Adressen, der mit einem benutzerkonfigurierbaren TV-Dienst assoziierten Multicast-Streams umfassen;
- Auswählen von Multicast-Streams aus der vorbestimmten Anzahl von Multicast-Streams unter Verwendung der Stream-Auswahlinformationen;
- Senden einer Stream-Anforderungsnachricht zu dem Zugangsknoten für jeden gewählten Multicast-Stream, wobei die Anforderungsnachricht die Übertragung des gewählten Stream zu dem Endgerät anfordert;
- Empfangen der gewählten Streams;
- Synchronisieren der gewählten Streams.

2. Verfahren nach Anspruch 1, wobei der Zugangsknoten über ein Gateway, vorzugsweise ein im Haus befindliches Gateway, mit dem Endgerät verbunden ist.

3. Verfahren nach Anspruch 2, wobei die Synchronisation durch das Endgerät, das Gateway oder den Zugangsknoten durchgeführt wird.

4. Verfahren nach Anspruch 2 oder 3, wobei die gewählten Streams unter Verwendung von Informationen aus dem RTP-Protokoll, die in den RTP-Paketen enthalten sind, vorzugsweise den RTP-Zeitstempelinformationen, synchronisiert werden.

5. Verfahren nach einem der Ansprüche 1 bis 4, wobei die Stream-Auswahlinformationen durch eine elektronische Programmanleitung (EPG) oder Verwendung eines Schemas des Domain Name System (DNS) bereitgestellt werden.

6. Verfahren nach einem der Ansprüche 1 bis 5, wobei die Stream-Anforderungsnachricht eine Join-Anforderung des Internet Group Management Protokoll (IGMP) umfasst.

7. Verfahren nach einem der Ansprüche 1 bis 6, wobei der eine oder die mehreren Medienserver ferner in der Lage sind, eine vorbestimmte Anzahl von mit dem benutzerkonfigurierbaren TV-Dienst assoziierten Unicast-Streams zu dem Zugangsknoten vorzugsweise unter Verwendung des RTSP-Protokolls zu übertragen, wobei das Verfahren ferner die folgenden Schritte umfasst:
- Auswählen eines oder mehrerer Unicast-Streams aus der vorbestimmten Anzahl von Unicast-Streams unter Verwendung der Stream-Auswahlinformationen;
- Senden einer Stream-Anforderungsnachricht zu einem oder mehreren Medienservern für jeden ausgewählten Unicast-Stream.

8. Verfahren nach Anspruch 7, wobei die Auswahlinformationen ferner URLs, vorzugsweise die RTSP URLs der vorbestimmten Anzahl von mit einem benutzerkonfigurierbaren TV-Dienst assoziierten Unicast-Streams umfassen.

9. Verfahren nach einem der Ansprüche 7 oder 8, wobei die Stream-Anforderungsnachricht eine Nachricht RTSP SETUP umfasst.

10. Verfahren nach einem der Ansprüche 1 bis 9, wobei die Streams unter Verwendung eines in dem Speicher des Endgeräts gespeicherten Benutzerprofils ausgewählt werden.

11. Verfahren nach einem der Ansprüche 1 bis 9, wobei mindestens ein Teil der Stream-Auswahlinformationen des benutzerkonfigurierbaren TV-Dienstes auf einer mit dem Endgerät verbundenen Anzeigeeinheit angezeigt wird und ein Benutzer in der Lage ist, unter Verwendung einer Fernbedienung Streams aus den angezeigten Stream-Auswahlinformationen auszuwählen.

12. System zum Konfigurieren eines TV-Signals, umfassend:
- ein mit einem Zugangsknoten verbundenes Endgerät;
- einen oder mehrere Medienserver mit der Fähigkeit zum Übertragen einer vorbestimmten Anzahl von mit einem benutzerkonfigurierbaren TV-Dienst assoziierten Multicast-Streams zu dem Zugangsknoten;
wobei das Endgerät Folgendes umfasst:
- Mittel zum Abrufen von Stream-Auswahlinformationen des benutzerkonfigurierbaren TV-Dienstes; wobei die Stream-Auswahlinformationen die IP-Adressen, vorzugsweise die Multicast-Adressen, der mit einem benutzerkonfigurierbaren TV-Dienst assoziierten Multicast-Streams umfassen;
- Mittel zum Auswählen von Multicast-Streams aus der vorbestimmten Anzahl von Multicast-Streams unter Verwendung der Stream-Auswahlinformationen;
- Mittel zum Senden einer Stream-Anforderungsnachricht zu dem Zugangsknoten für jeden gewählten Multicast-Stream, wobei die Anforderungsnachricht die Übertragung des gewählten Stream zu dem Endgerät anfordert;
- Mittel zum Empfangen der gewählten Streams, wobei das Endgerät oder der Zugangsknoten oder ein Gateway dafür ausgelegt ist, die gewählten Streams zu synchronisieren.

## Revendications

1. Procédé de configuration d'un signal TV dans un système comportant un terminal d'extrémité relié à un noeud d'accès, un ou plusieurs serveurs de média capables d'émettre vers le noeud d'accès un nombre prédéterminé de flux de multidiffusion associés à un service de TV configurable par les utilisateurs, le procédé comportant les étapes consistant à :
- récupérer des informations de sélection de flux relatives au service de TV configurable par les utilisateurs ; les informations de sélection de flux comportant les adresses IP, de préférence les adresses de multidiffusion, des flux de multidiffusion associés à un service de TV configurable par les utilisateurs ;
- sélectionner des flux de multidiffusion parmi le nombre prédéterminé de flux de multidiffusion à l'aide des informations de sélection de flux ;
- envoyer, pour chaque flux de multidiffusion sélectionné, un message de demande de flux au noeud d'accès, le message de demande demandant l'émission du flux sélectionné vers le terminal d'extrémité ;
- recevoir les flux sélectionnés ;
- synchroniser les flux sélectionnés.

2. Procédé selon la revendication 1, le noeud d'accès étant relié au terminal d'extrémité via une passerelle, de préférence une passerelle située à domicile.

3. Procédé selon la revendication 2, la synchronisation étant effectuée par le terminal d'extrémité, la passerelle ou le noeud d'accès.

4. Procédé selon les revendications 2 ou 3, les flux sélectionnés étant synchronisés à l'aide d'informations issues du protocole RTP contenues dans les paquets RTP, de préférence les informations d'horodatage RTP.

5. Procédé selon l'une quelconque des revendications 1 à 4, les informations de sélection de flux étant communiquées par un guide électronique des programmes (EPG) ou à l'aide d'une structure de système de noms de domaines (DNS).

6. Procédé selon l'une quelconque des revendications 1 à 5, le message de demande de flux comportant une demande de rattachement selon un Protocole Internet de gestion de groupe (IGMP).

7. Procédé selon l'une quelconque des revendications 1 à 6, le ou les serveurs de média étant en outre capable d'émettre vers le noeud d'accès un nombre prédéterminé de flux en monodiffusion associés au service de TV configurable par les utilisateurs, de préférence en utilisant le protocole RTSP, le procédé comportant en outre les étapes consistant à :
- sélectionner un ou plusieurs flux de monodiffusion parmi le nombre prédéterminé de flux de monodiffusion à l'aide des informations de sélection de flux ;
- envoyer, pour chaque flux de monodiffusion sélectionné, un message de demande de flux à un ou plusieurs serveurs de média.

8. Procédé selon la revendication 7, les informations de sélection de flux comportant en outre des URL, de préférence les URL sous RTSP, du nombre prédéterminé de flux de monodiffusion associés à un service de TV configurable par les utilisateurs.

9. Procédé selon l'une quelconque des revendications 7 et 8, le message de demande de flux comportant un message SETUP sous RTSP.

10. Procédé selon l'une quelconque des revendications 1 à 9, les flux étant sélectionnés à l'aide d'un profil d'utilisateur conservé dans la mémoire du terminal d'extrémité.

11. Procédé selon l'une quelconque des revendications 1 à 9, au moins une partie des informations de sélection de flux du service de TV configurable par les utilisateurs étant présentées sur une unité d'affichage reliée au terminal d'extrémité et un utilisateur étant en mesure de sélectionner des flux à partir des informations affichées de sélection du flux à l'aide d'une télécommande.

12. Système de configuration d'un signal TV , comportant :
- un terminal d'extrémité relié à un noeud d'accès ;
- un ou plusieurs serveurs de média capables d'émettre vers le noeud d'accès un nombre prédéterminé de flux de multidiffusion associés à un service de TV configurable par les utilisateurs ;
le terminal d'extrémité comportant :
- un moyen de récupération d'informations de sélection de flux relatives au service de TV configurable par les utilisateurs ; les informations de sélection de flux comportant les adresses IP, de préférence les adresses de multidiffusion, des flux de multidiffusion associés à un service de TV configurable par les utilisateurs ;
- un moyen de sélection de flux de multidiffusion parmi le nombre prédéterminé de flux de multidiffusion à l'aide des informations de sélection de flux ;
- un moyen d'envoi, pour chaque flux de multidiffusion sélectionné, d'un message de demande de flux au noeud d'accès, le message de demande demandant l'émission du flux sélectionné vers le terminal d'extrémité ;
- un moyen de réception des flux sélectionnés ;
le terminal d'extrémité, le noeud d'accès ou une passerelle étant configuré(e) pour synchroniser les flux sélectionnés.
